Europäisches Patentamt

European Patent Office

Office européen des brevets

(11) Publication number: **0 113 906**
**B1**

(12) **EUROPEAN PATENT SPECIFICATION**

(45) Date of publication of patent specification: **30.03.88**

(51) Int. Cl.⁴: **G 01 B 5/00**

(21) Application number: **83112916.8**

(22) Date of filing: **21.12.83**

(54) **Method for measuring deformations of vehicle frames or bodies and measuring frame for performing that method.**

(30) Priority: **21.12.82 SE 8207288**

(43) Date of publication of application:
**25.07.84 Bulletin 84/30**

(45) Publication of the grant of the patent:
**30.03.88 Bulletin 88/13**

(84) Designated Contracting States:
**BE DE FR GB IT NL**

(56) References cited:
**DE-A-2 444 037**
**DE-A-2 752 319**
**DE-B-2 246 011**
**GB-A-1 554 419**
**GB-A-1 583 455**
**US-A-4 329 784**

(73) Proprietor: **HEIN-WERNER CORPORATION**
**1005 Perkins Avenue**
**Waukesha Wisconsin 53187 (US)**

(72) Inventor: **Giacomini, Jean François**
**Ugglestigen 7**
**S-703 48 Örebro (SE)**
Inventor: **Marchand, Claude**
**Logis du Vaumoreau**
**F-79230 Vouille (FR)**

(74) Representative: **Franke, Karl Wilhelm, Dr.**
**Steinsdorfstrasse 10**
**D-8000 München 22 (DE)**

## Description

The invention relates to a method for measuring deformations of vehicle frames or bodies and to a measuring device for performing that method.

The invention is particularly destined for usage in connection with the inspection of damages or of the alignment of vehicles involved in an accident.

The known technique of detecting the kind and the extent of damages on vehicles involved in an accident mainly comprises two typs of measuring devices which are selectively employed in dependency on the amount of deformation expected on the frames or bodies of the respective vehicles.

First there are heavy, bulky and expensive measuring frames or measuring jigs examples for which are described in DE—B2—22 46 011, DE—B2—23 24 530, US—A—3 805 396 or SE—A—7513214—5. Those devices lead to exact and reliable measuring results but their usage, due to their size and cost, practically is restricted to cases where greater damage of the respective vehicle is observed or at least expected.

The second type of such known devices is formed by simpler structures of less size and price which may be put into use in less time and with less labour.

A first example for a device of that kind is described in DE—A1—24 44 037. The said known device includes a plurality of beams which are pivotably connected to each other and the last of which is provided with a measuring pole which may be directed towards a reference point provided on the vehicle for measuring purposes. The coordinates of the said reference point than may be derived from data indicating the mutual orientations and positions of the several beams. The first beam is connected to the underside of the vehicle by means of clamping rods attached along the said beam and acting along its axis. Such a type of suspension of the device below the vehicle cannot guarantee the maintenance of a measuring plane in an exact manner throughout the whole measuring operation during which the effective lengths of the swivelling beams are considerably changed.

Another example for a measuring device of the second type is described in GB—A—1 583 455. The said known device comprises a longitudinal beam along which transversely extending sliders may be displaced which carry measuring poles which may be directed towards reference points on the vehicle to be measured. Scales provided along the longitudinal beam and along the sliders as well as along the measuring poles allow reading the coordinates of the respective reference points in relation to the longitudinal beam. The longitudinal beam is supported through tripods of adjustable height which rest on the floor below the vehicle. Again that kind of support generates difficulties in maintaining an exact positon of a measuring plane in relation to the vehicle throughout the measuring operation.

Accordingly, it is the main object of the present invention to provide a simple and inexpensive method and apparatus which nevertheless can guarantee a reliable and rapid check of a vehicle to decide how big a certain damage is, whether a certain vehicle can be repaired and if a vehicle can be considered aligned in a roadworthy and acceptable manner through exactly and permanently defining a measuring plane throughout the measuring operation.

This and other objects are attained according to the invention through the features claimed in claims 1 (method) and 3 (apparatus).

Specially constructed gripping means are clamped to four undamaged reference points in the central section of a vehicle to be examined so that two transverse beams can be rapidly coupled to the said gripping means. The said two transverse beams both of which are coupled to one pair of gripping means each then are combined with a longitudinal centre beam to form an H-shaped measuring frame which is adjusted to lie in a plane parallel to the ground plane of the vehicle. Then a measuring beam is rapidly coupled to the two transverse beams by using movable attaching means so that the said measuring beam can be given an arbitrary orientation within a plane parallel to the ground plane of the vehicle to define a measuring plane. Measurements along horizontal directions in the said measuring plane may be effected then using measuring scales provided on the several beams preferably in cooperation with indicating means arranged for sliding movement along the beams. Moreover, the measuring beam is provided with at least one measuring pole for vertical measurement perpendicular to the ground plane of the vehicle. Additionally, to perform crosswise and/or direct measurement at least one measuring rod can be coupled to the longitudinal centre beam and/or to the transverse beams. Preferably, the said measuring rod is designed for telescopic extension of its length and is provided with a measuring tip on its one end and with a ball joint for rapid coupling to fixed balls mounted on the transverse and longitudinal centre beams for sliding movement therealong.

The measuring method is carried out in such a way that four gripping means are clamped to four reference points on the vehicle located in the centre portion thereof. The said gripping means in turn are combined with quickly mountable measuring frame which is placed in a plane parallel to the ground plane of the vehicle. For the said purpose either the gripping means are attached to four undamaged reference points or at least three gripping means are coupled to undamaged reference points and the fourth gripping means being attached to a damaged reference point is clamped thereto and adjusted in such a manner that the measuring plane as defined by the measuring frame is not dislocated. Then a measuring beam provided with the measuring means required can be quickly coupled parallely to the ground plane of the measuring frame and of the vehicle so that all the other reference points on the vehicle can be rapidly checked by appropriate measurement.

Preferably, the measuring frame according to this invention can be dismantled to obtain short beam sections and other parts or components which can be easily accommodated in a usual suitcase. Further, the measuring frame is provided with a telescopic measuring rod by means of which any desired crosswise measurements can be rapidly carried out. Thus the invention permits to in practice detect every small deformation of a vehicle which though involved in an accident would not be placed to a levelling bench or similar equipment for reasons of time and costs. Therefore the invention provides a portable quickly usable and cheap diagnostic instrument which is of special advantage for insurance companies, trading companies, research laboratories, police officials etc. which though not directly engaged in motor car repair activities often are required to perform checking of such vehicles in a simple, quick and cheap way.

An essential and important advantage of this invention is the fact that it takes only very little space under the vehicle to be examined and leaves the floor free such that work with the vehicle can be effected in upright position without troublesome obstacles. Moreover, it is of special advantage that the whole apparatus can be made with low weight and dimensions using profiled rods made from light metal such as aluminium such that it can be easily accommodated and transported in a usual suitcase.

Further objects of this invention, together with additional features contributing thereto and advantages accruing therefrom, will be apparent from the following description of one preferred embodiment of this invention when read in conjunction with the accompanying drawings, wherein:

Fig. 1 is a perspective view of a measuring frame as a whole,

Fig. 2 is a sectional view of measuring pole attachment, longitudinal centre beam and measuring beam,

Fig. 3 shows one gripping means with its pole and attachment,

Fig. 4 shows one gripping means in a sectional view,

Fig. 5 shows added measuring means including telescopic poles and rods and measuring tips and

Fig. 6 shows jointing means for connecting beam parts to each other in connected condition (Fig. 6A) and in split condition (Fig. 6B).

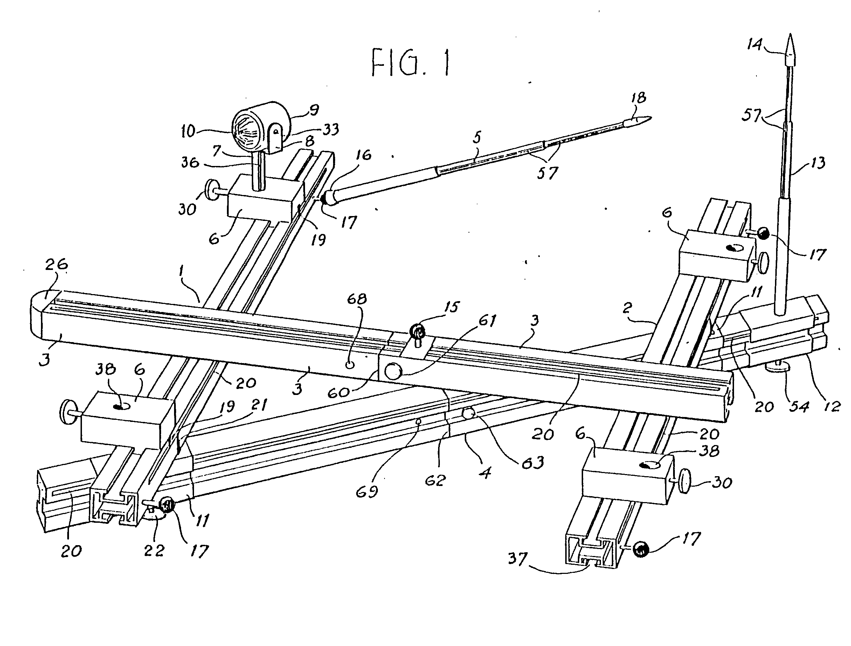

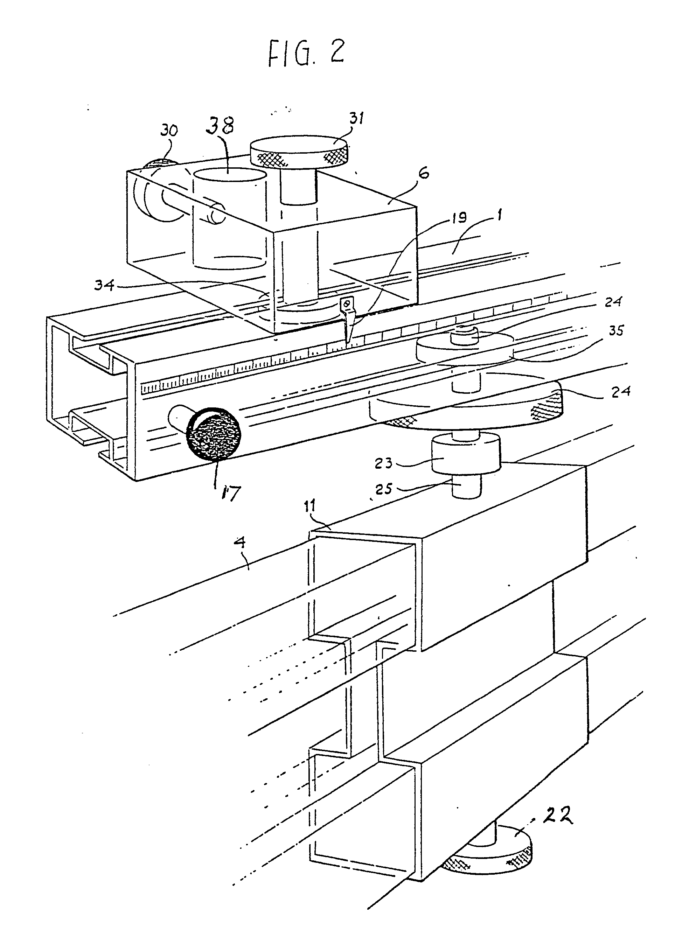

Referring to Figs. 1, 2 and 3 a selected example is shown for illustrative purposes where two transverse beams 1, 2 are made of aluminium profiles having grooves 37 for simply fitting mounting discs 34, 35 (Fig. 2) having threaded holes in which several mounting and screwing operations can be easily carried out. Moreover, a longitudinal centre beam 3 is shown having the same profile as the transverse beams 1, 2. The longitudinal centre beam 3 is placed on top at the centre of the transverse beams 1, 2 by means of quick fastening means including locking discs and locking screws not specifically shown in the drawings and cooperating through tapered guides in order that the longitudinal centre beam 3 might be clamped to the two transverse beams 1, 2 to form a fixed H-shaped measuring frame.

A measuring beam 4 can be arranged below and attached to the two transverse beams 1, 2 by means of two quick couplings 23, 25 (cf. Fig. 2) engaging attachments 11 so that the measuring beam 4 will hang under the measuring frame. The attachments 11 for the measuring beam 4 can be pushed to and locked in an arbitrary position along the transverse beams 1, 2. Quick coupling 23, 25 cooperates with a screw 24 which can be locked to mounting disc 35 which can slide along the profiles of the transverse beams 1, 2. Functional details of quick coupling 23, 25 being self-explaining are not shown specifically.

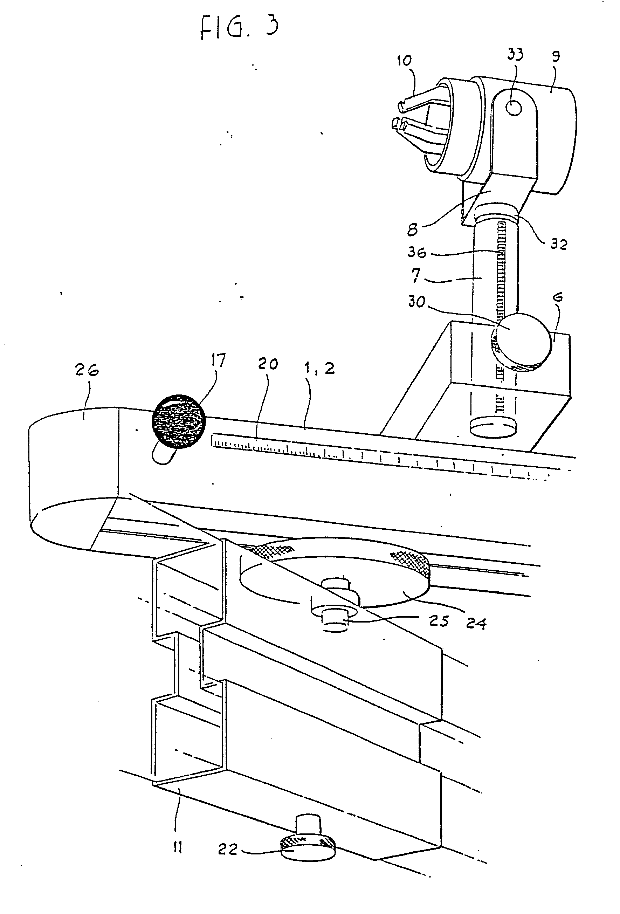

A measuring rod 5 can be rapidly connected to the transverse beams 1, 2 — and possibly also to the longitudinal centre beam 3 — by means of ball joints 17 provided on the respective beams 1, 2, 3 for cooperation with a quick coupling 16 provided on one end of the measuring rod 5 and designed for receiving one ball to form a universal joint. The measuring rod is of telescopic type and is provided with a measuring tip 18 on its free end and with a graduated scale 57 along its length. Each transverse beam 1, 2 is provided with two pole feet 6 which can be locked in an arbitrary position along the transverse beams 1, 2 by means of mounting discs 34 cooperating with locking screws 31. Every pole foot 6 is provided with a pole hole 38 and a locking screw 30 for vertically adjustably receiving and fixing poles 7 provided with graduated scales 36. Brides 8 can be attached to poles 7 through quick couplings 32 (Fig. 3). Gripping means 9 are pivotably connected to brides 8 through joint pins 33 for being coupled to the transverse beams 1, 2. Pole feet 6 are further provided with pointers 19 for indicating the position of the respective pole foot 6 along graduated scales 20 provided along the lengths of the transverse beams 1, 2. Each gripping means 9 is provided with at least three gripping clutches 10 for clamping attachment to one of the reference points on the vehicle to be checked.

It should be noted that graduated scales 20 can be provided also along the longitudinal centre beam 3 and along the measuring beam 4 for effecting length measurement therealong.

At one of its ends the measuring beam 4 is provided with an attachment 12 for securing a measuring pole 13 by means of a locking screw 54. The measuring pole 13 is of a telescopic design and is provided with a measuring tip 14 on its free upper end and with a graduated scale 57 extending along its length.

On its upper side the longitudinal centre beam 3 is provided with an adjustable reference ball 15 which can be locked on the longitudinal centre beam 3 by means of locking means including a locking screw and a mounting disc not specifically shown in the drawing but arranged and designed for cooperation with each other for locking action in a beam groove extending along the length of the longitudinal centre beam 3.

Through the attachments 11 the measuring beam 4 can be suspended under the transverse beams 1, 2 and be locked therealong by means of locking screws 22, the respective position of the measuring beam 4 along the transverse beams 1, 2 being indicated by pointers 21 sliding along the scales 20.

For the purpose of obtaining protection against breakage the ends of every beam 1, 2, 3 and 4 may be provided with end caps 26 as shown in Fig. 1 for one end of the longitudinal centre beam 3.

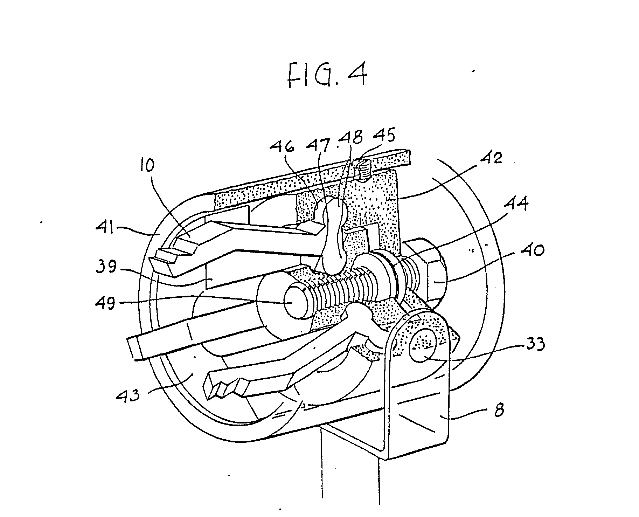

Referring to Fig. 4 one gripping means 9 is shown in more detail in a sectional view. The gripping means 9 shown consists of an adjusting screw 40 and of a sleeve 41 receiving a piston 43 for sliding movement. A cylinder 42 is rigidly connected to the sleeve 41 by means of a locking screw 45. The adjustment screw 40 can be rotated within a central hole in the cylinder 42 and is locked to it by means of a locking ring 44. The cylinder 42 and the piston 43 have two semicircular concave surfaces 46 and 47 which axially move relative to each other upon rotation of the adjusting screw 40. The adjustment screw itself then moves in a threaded central hole 49 of the piston 43. At least three gripping clutches 10 having double balls 45, 48 are fitted into the concave surfaces 46 and 47 so that the gripping clutches 10 may be pivoted towards or from the longitudinal axis of the gripping means 9 upon rotation of the adjustment screw 40 for axial movement of the surface 46 and 47 relative to each other. In order that the gripping clutches 10 may move axially grooves 39 are provided in the piston 43. When the adjustment screw 40 is rotated clockwise, the piston 43 moves to the right (in Fig. 4) entraining the surface 47 therewith such that the innermost balls 48 of the gripping clutches 10 are moved to the right swiveling the gripping clutches 10 towards the centre axis of the gripping means 9 for clamping action upon a reference bolt and for releasing action from a reference hole respectively. When the adjustment screw 40 is rotated anticlockwise, the gripping clutches 10 are swiveled towards the opposite direction for releasing and for clamping action respectively. Thanks to the gear of the adjusting screw 40 the gripping clutches 10 can be easily clamped within a reference hole or clamped around a reference bolt with great force.

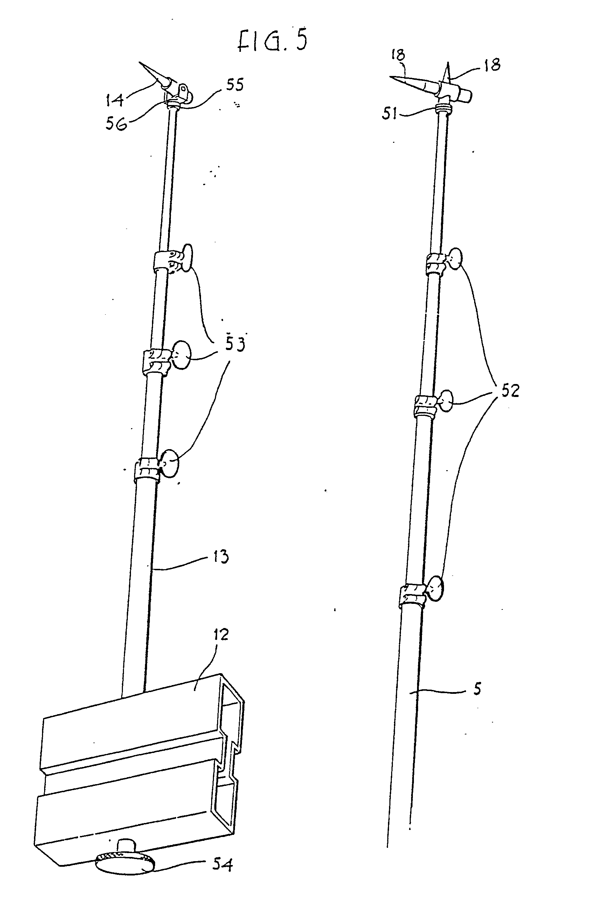

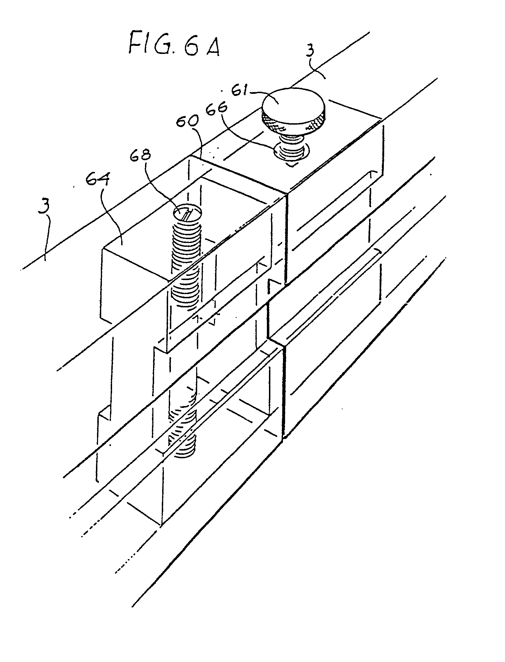

Fig. 5 first specifically shows one telescopic measuring rod 5 provided with locking rings 52 and double measuring tips 18 as well as an angle bracket 51. Moreover, the attachment 12 on the measuring beam 4 having a locking screw 54 and one telescopic-type measuring pole 13 for the measuring tip 14 having locking rings 53 are shown. The measuring tip 14 is mounted on the measuring pole 13 by means of a locking ring 55 and an angle bracket 56. The angle bracket 56 is provided with V-shaped grooves at an angle of 45° for locking the measuring tip 14 which thus can be adjusted in 45° and 90° relative to the measuring pole 13. The measuring rod 5 and the measuring pole 13 can be given the same design with three different angular settings.

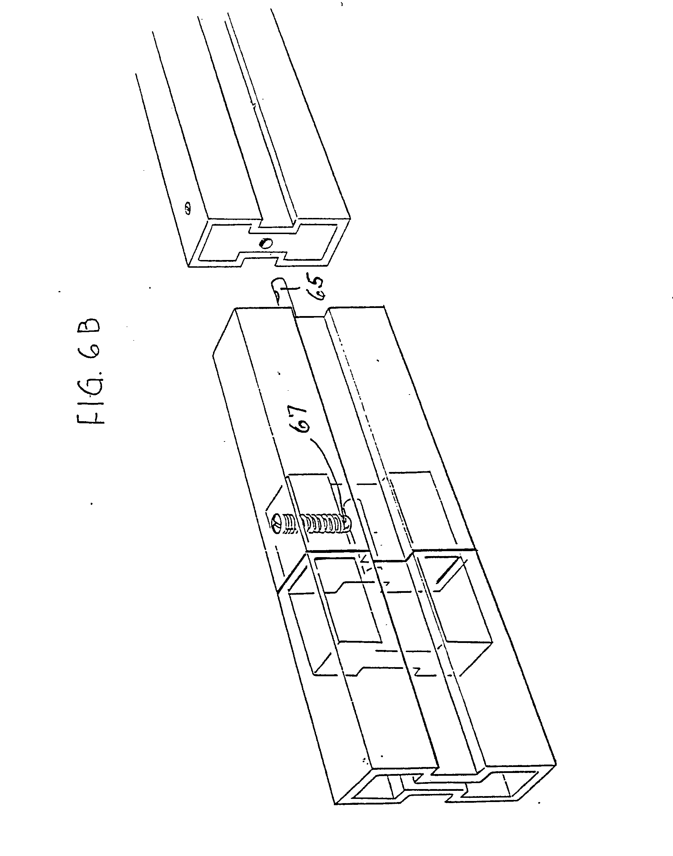

Fig. 6 shows the principle of joining two beam parts of the longitudinal centre beam 3 at the joint 60 (Fig. 1). A jointing block 64 has been screw-fixed into the left beam part by a locking screw 68. The jointing block 64 is further provided with a conical guide 66 so that the right beam part is guided into position when a second locking screw 61 is tightened. In the same manner parts of the measuring beam 4 can be jointed at a joint 62 by means of a jointing block (not shown) screw-fixed within the left beam part by a locking screw 69 such that after introduction into the right beam part that can be drawn into position through a guide groove and locked by a locking screw 63.

Fig. 6 moreover illustrates another way for joining beam parts to each other. Here two jointing blocks are used one of which is fixed within the left beam part and has a grooved pin 65 projecting towards the right beam part to be introduced into a hole in another jointing block fixed in the right beam part for being locked there by a spring-loaded locking ball 67 in the manner of a snap-coupling.

In an alternative embodiment not shown in the drawings the reference ball 15 on top of the longitudinal centre beam 3 may be replaced by a shaft around which a measuring rod in the form of a beam can be rotated into several positions in a ground plane. That beam may be provided with a measuring tip of the same type as that of the measuring beam 4, and then it is also possible to carry out a height measurement.

Moreover, gripping means of a design different from that of the gripping means 9 as shown in Fig. 4 may be used. A possible way of changing design is to make the concave surfaces 46, 47 and the cooperating balls 48 change positions. That might lead to a considerable reduction in diameter for the gripping means. Advantageously, the concave and convex joint surfaces cooperating with each other can be coated with a film of rubber or similar material to get a soft motion of the gripping clutches without any play.

Quick couplings used for connecting beams and other components instead of being designed in the form of cooperating mounting discs slidably guided within grooves and locking screws may also be designed as sliders having an upper portion to be placed on top of a beam and downwardly extending sides designed for being clamped to the side beam by cooperation of locking screws and jaws.

Sliders of the said type may be used not only for carrying measuring rods or measuring poles but may also serve as carriers for pointers for direct measurement in a horizontal plane. In addition to measuring tips placed on the free ends of measuring rods or measuring poles extensions of various design may be connected to the measuring means for pointing to or contacting certain reference points on the vehicle to be checked.

The embodiment shown in Fig. 1 to 6 may be put into operation in the following manner:

Two reference points located symmetrically on either side of a vehicle to be examined are localized, and the vehicle is hoisted up to a suitable working height with the vehicle's weight left on all four wheels of the vehicle.

The several beam parts are connected to each other at the respective joints. Four single gripping means 9 are clamped to four selected reference points on the vehicle. At least three of the said reference points which may be reference holes and/or reference bolts have to be undamaged. The two transverse beams 1, 2 each having two pole feet 6 loosely fitted thereupon for sliding movement therealong are coupled to the four gripping means 9 in pairs. In that connection it is within the scope of this invention to attach the poles 7 to the brackets 8 through bayonet couplings, and such couplings may be used also for connecting other parts and components with each other.

Then the pole feet 6 act to loosely suspend the transverse beams 1, 2 below the vehicle to be examined. The next step is to adjust the pole feet 6 as to their positions along the transverse beams 1, 2 to obtain symmetrical configurations using the pointers 19 in cooperation with the scales 20. Then the pole feet 6 are locked with the transverse beams 1, 2 being symmetrically suspended below the vehicle. Then the poles 7 are checked and if necessary are adjusted with regard to their heights to obtain conditions suitable with respect to the vehicle.

Then the longitudinal centre beam 3 is screwed home exactly along the centre line of the vehicle reading the scales 20 for controlling purposes. Thus, an H-shaped measuring frame structure is obtained defining a measuring plane parallel to the ground plane of the vehicle.

Then the measuring beam 4 is coupled to the measuring frame through the corresponding quick couplings, and the attachments 11 are adjusted to bring the measuring beam 4 in a position to extend straight below a specific reference point to be checked. It is advantageous to place one of the two attachments 11 centrally on the centre line of the vehicle but this is not a necessary condition. Then the measuring pole 13 through adjusting the corresponding attachment 12 is moved to bring the measuring tip 14 in contact with another reference point. Every part of the measuring beam 4 is locked then, and readings are effected on the scale 57 along the measuring pole 13 for height measurement and on the scales 20 on the transverse beams 1, 2 for angle measurement in the measuring plane. Preferably, but not necessarily, one of the transverse beams 1, 2 in advance has been adjusted to zero by locating the measuring beam 4 on the centre line. Length reading then is carried out on scale 20 along the measuring beam 4. Thus the position of the reference point in the ground plane has been obtained in the form of a direct length measurement and one or two measures from the scales 20 on the transverse beams 1, 2 which in principle give the angle relative to the centre line.

The corresponding reference point on the other side of the centre line is then measured for control in the same way, and any difference in the readings obtained is a measure for a possible deformation of the vehicle. Height difference and lateral and longitudinal displacements can be easily calculated then. Advantageously, an alignment chart can be prepared for direct reading of the results in mm.

In cases where there is no difference in height it may be convenient to use the measuring rod 5 for the direct measurement, the reference ball 15 being used.

The whole proceedings for measurement can be completed within only a fraction of one hour of working even if several reference points have to be checked.

A certain reference point can be quickly checked by means of prepared data sheets by preadjusting certain values on the scales. Therefore, the apparatus can also be used as a comfortable and quick measuring instrument.

While the invention has been described above with reference to some preferred embodiments, it will be understood by those skilled in the art that various changes may be made and equivalents may be substituted for elements thereof without departing from the scope of the invention. In addition, many modifications may be made to adapt a particular situation or material to the teachings of this invention without departing from the essential scope thereof. Therefore, it is intended that this invention not be limited to the particular embodiments disclosed as a mode contemplated for carrying out this invention, but that the invention will include all embodiments falling within the scope of the appended claims.

**Claims**

1. A method for measuring deformations of the frame or the body of a vehicle by detecting positions of reference points provided on the vehicle, in which

— gripping means (9) are attached to the vehicle,

— a measuring structure comprising a plurality of beams (1, 2, 3, 4) coupled to each other for variable mutual orientation is suspended from said gripping means below the vehicle,

— at least one measuring pole (13) carried by one beam of said measuring structure is directed towards at least one reference point on the vehicle and

— the three coordinates in space of said reference point are measured reading data indicating the orientations and/or positions of said beams and of said at least one measuring pole relative to each other,

characterised in

that two transverse beams (1, 2) and a longitudinal centre beam (3) are coupled to each other to form an H-shaped measuring frame,

that two pairs of gripping means (9) are mounted on said transverse beams, one pair on each beam, lockably displaceable along the respective transverse beam,

that said four gripping means (9) are clamped to four reference points in the central part of the vehicle, one gripping means to each one of said reference points at least three of which are undamaged,

that said H-shaped measuring frame is adjusted to lie in a measuring plane parallel to the ground plane of the vehicle using the three gripping means clamped to three undamaged reference points, the fourth gripping means, if attached to a damaged reference point, being clamped thereto and adjusted in a manner not to dislocate said measuring plane,

that a measuring beam (4) is coupled to said transverse beams using displaceable fastening means (11) permitting arbitrary orientation of said measuring beam in said measuring plane and

that said at least one measuring pole (13) is provided on said measuring beam and is displaced therealong and extended to have its free end adjusted to further reference points on the vehicle to check the coordinates of said further reference points in and above said measuring plane for measurement of the vehicle frame or body in vertical and horizontal directions.

2. A method as claimed in claim 1, characterized in that at least one measuring rod (5) is provided having one of its ends pivotably connected to one of the transverse beams (1, 2) or to the longitudinal centre beam (3) for direct and/or cross measurements to check the positions of further reference points on the vehicle.

3. A measuring device for performing the method of claim 1, comprising a measuring structure comprising a plurality of beams (1, 2, 3, 4) coupled to each other for variable mutual orientation and provided with gripping means (9) to suspend said measuring structure below the vehicle and at least one measuring pole (13) adapted to be directed towards reference points on the vehicle to check the spatial positions thereof with respect to the positions of said plurality of beams,

characterised in

that the measuring structure comprises

— two transverse beams (1, 2) each provided with a pair of gripping means (9) adjustable along the respective transverse beam (1, 2) to suspend said transverse beams (1, 2) below four reference points on the vehicle,

— a longitudinal centre beam (3) releasably coupled to said transverse beams (1, 2) to form an H-shaped measuring frame in a measuring plane parallel to the ground plane of the vehicle, and

— a measuring beam (4) adjustably attached below said transverse beams (1, 2) by means of fastening means (11) lockably displaceable along said transverse beams (1, 2) for adjusting said measuring beam (4) under an arbitrary angle to the longitudinal axis of the vehicle in a plane parallel to the measuring plane,

— the at least one measuring pole (13) being attached to the measuring beam (4) for horizontal and vertical measurement of the positions of further reference points on the vehicle.

4. A measuring device as claimed in claim 3, characterised by at least one measuring rod (5) each pivotably connected to one of the transverse beams (1, 2) and/or to the longitudinal centre beam (3) for direct or, alternatively, cross measurement towards further reference points on the vehicle.

5. A measuring device as claimed in claim 4, characterised in that each of the transverse beams (1, 2) and/or the longitudinal centre beam (3) are provided with universal joints (17) for pivotably connecting one end of a measuring rod (5).

6. A measuring device as claimed in one of the claims 3 to 5, characterised in that the several beams (1, 2, 3, 4) are designed divisible with regard to their lengths, including jointing means (64) having guiding means (65; 66) and locking means (61, 68; 67) cooperating with each other for properly introducing the beam parts into each other to be releasably locked to each other.

7. A measuring device as claimed in claim 6, characterised in that the parts of the subdivided beams (1, 2, 3, 4) are locked to each other by screw means (61, 63, 68, 69).

8. A measuring device as claimed in claim 6, characterised in that the parts of the subdivided beams (1, 2, 3, 4) are connected to each other by bayonet joints or by snap couplings (65, 67).

9. A measuring device as claimed in one of the claims 3 to 8, characterised in that the several beams (1, 2, 3, 4) are profiled rods, preferably including longitudinal grooves (37), made from light metal such as aluminium.

10. A measuring device as claimed in one of the claims 3 to 9, characterised in that the connections between the gripping means (9) and the transverse beams (1, 2) include bayonet joints and/or snap couplings for rapid connection.

11. A measuring device as claimed in one of the claims 3 to 10, characterised in that the measuring poles (13) and/or the measuring rods (5) are designed to be telescopically extensible arms provided with measuring scales (57) along at least part of their lengths and/or with measuring tips (14, 18) at their free ends.

12. A measuring device as claimed in one of the claims 3 to 11, characterised in that the beams (1, 2, 3, 4) are provided with measuring scales (20) extending along at least parts of their lengths.

13. A measuring device as claimed in one of the claims 3 to 12, characterised in that the several beams (1, 2, 3, 4) are connected to each other, to the gripping means (9), to the measuring poles (13) and to the measuring rods (5) by means of connecting means (6, 11, 12, 17) designed for blockably sliding movement along the respective beams (1, 2, 3, 4).

14. A measuring device as claimed in claim 13, characterised in that the beams (1, 2, 3, 4) are provided with grooves (37) extending along their lengths to receive part (34, 35) of the said connecting means (6, 11, 12, 17) for sliding movement therealong.

15. A measuring device as claimed in claim 13, characterised in that the connecting means (6, 11, 12, 17) are designed to engage the respective beams (1, 2, 3, 4) along the upper surfaces and at least part of the sides thereof.

16. A measuring device as claimed in claim 14 or 15, characterised in that the connecting means (6, 11, 12, 17) include screw means (22, 31, 54) for locking the connecting means (6, 11, 12, 17) on the respective beams (1, 2, 3, 4).

17. A measuring device as claimed in one of the claims 3 to 16, characterised by at least one additional slider mounted on at least one of the beams (1, 2, 3, 4) for blockable movement therealong permitting direct measurements towards further reference points.

18. A measuring device as claimed in claim 17, characterised in that the additional sliders are designed to be locked on the respective beams (1, 2, 3, 4) by screwing action.

19. A measuring device as claimed in claim 17 or 18, characterised in that the additional sliders are provided with extensions designed to point towards or to contact further reference points.

20. A measuring device as claimed in one of the claims 3 to 19, characterised in that the measuring pole (13) and/or the measuring rod (5) are provided with extensions slidable therealong and/or rotatable thereabout to point towards or to contact further reference points.

21. A measuring device as claimed in one of the claims 3 to 20, characterised in that the longitudinal centre beam (3) is provided with a reference means (15) projecting from its upper surface to create a zero point for measurement.

22. A measuring device as claimed in one of the claims 3 to 21, characterised in that the gripping means (9) are provided with replaceable head portions (10) specifically designed for attachment to specially designed reference points such as reference holes or reference bolts.

23. A measuring device as claimed in one of the claims 3 to 22, characterised in that the gripping means (9) are pivotably connected to height adjusting means (7, 30) which are attached to the transverse beams (1, 2) for sliding movement therealong.

**Patentansprüche**

1. Verfahren zum Messen von Verformungen am Rahmen oder an der Karosserie eines Fahrzeugs mittels Erfassung der Lage von Bezugspunkten an dem Fahrzeug, bei dem
— Greiforgane (9) an dem Fahrzeug befestigt werden,
— ein Meßaufbau mit einer Mehrzahl von veränderbar zueinander ausrichtbar miteinander gekoppelten Balken (1, 2, 3, 4) an besagten Greiforganen unterhalb des Fahrzeugs aufgehängt wird,
— wenigstens ein von einem Balken besagten Meßaufbaus getragener Meßstab (13) auf wenigstens einen Bezugspunkt an dem Fahrzeug gerichtet wird un
— die drei Raumkoordinaten besagten Bezugspunktes gemessen werden, indem die Ausrichtung und/oder die Lage besagter Balken und besagten wenigstens eines Meßstabes relativ zueinander anzeigende Daten abgelesen werden,
dadurch gekennzeichnet,
daß zwei Querbalken (1, 2) und ein zentraler Längsbalken (3) miteinander gekoppelt werden, um einen H-förmigen Meßrahmen zu bilden,
daß an besagten Querbalken zwei Paare von Grieforganen (9), ein Paar an jedem der Balken, arretierbar entlang des jeweiligen Querbalkens verschiebbar angeordnet werden,
daß besagte vier Greiforgane (9) an vier Bezugspunkten im zentralen Bereich des Fahrzeugs, je ein Greiforgan an jeweils einem der besagten Bezugspunkte, von denen wenigstens drei unbeschädigt sind, festgeklemmt werden,
daß besagter H-förmiger Meßrahmen unter Verwendung der drei an drei unbeschädigten Bezugspunkten festgeklemmten Greiforgane so justiert wird, daß er in einer zur Grundebene des Fahrzeugs parallelen Meßebene liegt, wobei das vierte Greiforgane bei Anbringung an einem beschädigten Bezugspunkt in solcher Weise daran festgeklemmt und justiert wird, daß die Meßebene nicht verschoben wird,
daß mit besagten Querbalken ein Meßbalken (4) unter Verwendung von die willkürliche Ausrichtung besagten Meßbalkens in besagter Meßebene gestattenden, verschiebbaren Befestigungsorganen (11) gekoppelt wird und
daß an besagtem Meßbalken wenigstens ein Meßstab (13) angeordnet und daran entlang verschoben und ausgezogen wird, bis sein freies Ende auf weitere Bezugspunkte an dem Fahrzeug eingestellt ist, um die Koordinaten besagter weiteren Bezugspunkte in und oberhalb besagter Meßebene zur Vermessung des Rahmens oder der Karosserie des Fahrzeugs in vertikaler und horizontaler Richtung zu überprüfen.

2. Verfahren nach Anspruch 1, dadurch gekennzeichnet,
daß wenigstens eine Meßstange (5) vorgesehen wird, die mit einem ihrer Enden zu direkter und/oder kreuzweiser Messung für eine Überprüfung der Lage weiterer Bezugspunkte an dem Fahrzeug schwenkbar mit einem der Querbalken (1, 2) oder mit dem zentralen Längsbalken (3) verbunden wird.

3. Meßvorrichtung zum Durchführen des Verfahrens nach Anspruch 1 mit einem Meßaufbau aus einer Mehrzahl von veränderbar aufeinander ausrichtbar miteinander gekoppelten Balken (1, 2, 3, 4), die mit Greiforganen (9) zum Aufhängen besagten Meßaufbaus unterhalb des Fahrzeugs und mit wenigstens einem Meßstab (13) versehen sind, der sich auf Bezugspunkte am Fahrzeug ausrichten läßt, um deren räumliche Lage in Bezug auf die Lage besagter Mehrzahl von Balken zu überprüfen,

dadurch gekennzeichnet,

daß der Meßaufbau

— zwei Querbalken (1, 2), von denen jeder mit einem Paar von Greiforganen (9) versehen ist, die sich entlang des jeweiligen Querbalkens (1, 2) einstellen lassen, um besagte Querbalken (1, 2) unterhalb von vier bezugspunkten an dem Fahrzeug aufzuhängen,

— einen zentralen Längsbalken (3), der sich zur Bildung eines H-förmigen Meßrahmens in einer zur Grundebene des Fahrzeugs parallelen Meßebene lösbar mit besagten Querbalken (1, 2) koppeln läßt, und

— einen unterhalb besagter Querbalken (1, 2) mittels entlang deren zu seiner Einstellung unter einem willkürlichen Winkel gegen die Längsachse des Fahrzeugs in einer zur Meßebene parallelen Ebene arretierbar verschiebbarer Befestigungsorgane (11) einstellbar befestigten Meßbalken (4) aufweist und

daß der wenigstens ein Meßstab (13) zur horizontalen und vertikalen Messung der Lage weiterer Bezugspunkte am Fahrzeug an dem Meßbalken (4) angeordnet ist.

4. Meßvorrichtung nach Anspruch 3, gekennzeichnet

durch wenigstens eine Meßstange (5), die zu direkter oder alternativ kreuzweiser Messung in Richtung auf weitere Bezugspunkte am Fahrzeug schwenkbar mit einem der Querbalken (1, 2) und/oder mit dem zentralen Längsbalken (3) verbunden ist.

5. Meßvorrichtung nach Anspruch 4, dadurch gekennzeichnet,

daß die Querbalken (1, 2) und/oder der zentrale Längsbalken (3) jeder mit Kugelgelenken (17) für eine Anlenkung eines Endes einer Meßstange (5) versehen sind.

6. Meßvorrichtung nach einem der Ansprüche 3 bis 5, dadurch gekennzeichnet,

daß die verschiedenen Balken (1, 2, 3, 4) in ihrer Länge unterteilbar ausgebildet sind, wobei sie Verbindungen (64) mit Führungselementen (65; 66) und Arretierelementen (61, 68; 67) aufweisen, die zu passender Einführung der Balkenteile ineinander und deren lösbarer Verriegelung miteinander zusammenwirken.

7. Meßvorrichtung nach Anspruch 6, dadurch gekennzeichnet,

daß die Teile der unterteilten Balken (1, 2, 3, 4) mittels Schraubelementen (61, 63, 68, 69) miteinander verriegelt sind.

8. Meßvorrichtung nach Anspruch 6, dadurch gekennzeichnet,

daß die Teile der unterteilten Balken (1, 2, 3, 4) mittels Bajonettverbindungen oder mittels Schnappkupplungen (65, 67) miteinander verriegelt sind.

9. Meßvorrichtung nach einem der Ansprüche 3 bis 8, dadurch gekennzeichnet,

daß die verschiedenen Balken (1, 2, 3, 4) Profilstangen sind, die aus Leichtmetall wie beispielsweise Aluminium hergestellt sind und vorzugsweise Längsnuten (37) aufweisen.

10. Meßvorrichtung nach einem der Ansprüche 3 bis 9, dadurch gekennzeichnet,

daß die Verbindungen zwischen den Greiforganen (9) und den Querbalken (1, 2) Bajonettverbindungen und/oder Schnappkupplungen für eine rasche Verbindung aufweisen.

11. Meßvorrichtung nach einem der Ansprüche 3 bis 10, dadurch gekennzeichnet,

daß die Meßstäbe (13) und/oder die Meßstangen (5) als teleskopartig ausziehbare Arme ausgebildet sind, die entlang wenigstens eines Teils ihrer Länge mit Meßskalen (57) und/oder an ihren freien Enden mit Meßspitzen (14, 18) versehen sind.

12. Meßvorrichtung nach einem der Ansprüche 3 bis 11, dadurch gekennzeichnet,

daß die Balken (1, 2, 3, 4) mit Meßskalen (20) versehen sind, die sich entlang wenigstens eines Teils ihrer Länge erstrecken.

13. Meßvorrichtung nach einem der Ansprüche 3 bis 12, dadurch gekennzeichnet,

daß die verschiedenen Balken (1, 2, 3, 4) miteinander, mit dem Greiforganen (9), mit den Meßstäßen (13) und mit den Meßstangen (5) mittels Verbindungselementen (6, 11, 12, 17) verbunden sind, die auf eine arretierbare Gleitbewegung entlang der jeweiligen Balken (1, 2, 3, 4) ausgelegt sind.

14. Meßvorrichtung nach Anspruch 13, dadurch gekennzeichnet,

daß die Balken (1, 2, 3, 4) mit Nuten (37) versehen sind, die sich entlang ihrer Länge erstrecken und Teile (34, 35) besagter· Verbindungselemente (6, 11, 12, 17) für deren Gleitbewegung daran entlang aufnehmen.

15. Meßvorrichtung nach Anspruch 13, dadurch gekennzeichnet,

daß die Verbindungselemente (6, 11, 12, 17) so ausgebildet sind, daß sie an den jeweiligen Balken (1, 2, 3, 4) entlang deren Oberseite und wenigstens eines Teils ihrer Seitenflächen anliegen.

16. Meßvorrichtung nach Anspruch 14 oder 15, dadurch gekennzeichnet,

daß die Verbindungselemente (6, 11, 12, 17) Schraubelemente (22, 31, 54) zu ihrer Arretierung auf den jeweiligen Balken (1, 2, 3, 4) aufweisen.

17. Meßvorrichtung nach einem der Ansprüche 3 bis 16, gekennzeichnet

durch wenigstens einen zusätzlichen Schieber, der auf wenigstens einem der Balken (1, 2, 3, 4) zu direkte Messungen in Richtung auf weitere Bezugspunkte gestattender arretierbarer Bewegung daran entlang angeordnet ist.

18. Meßvorrichtung nach Anspruch 17, dadurch gekennzeichnet,

daß die zusätzlichen Schieber so ausgebildet sind, daß sie sich auf den jeweiligen Balken (1, 2, 3, 4) durch Schraubwirkung festlegen lassen.

19. Meßvorrichtung nach Anspruch 17 oder 18, dadurch gekennzeichnet,

daß die zusätzlichen Schieber mit zur Ausrichtung auf oder zum Berühren von weiteren Bezugspunkten ausgebildeten Verlängerungen versehen sind.

20. Meßvorrichtung nach einem der Ansprüche 3 bis 19, dadurch gekennzeichnet,

daß der Meßstab (13) und/oder die Meßstange (5) mit Ansätzen versehen sind, die sich daran entlang gleitende verschieben und/oder darum herum verdrehen lassen, um auf weitere Bezugspunkte zu zu weisen oder diese zu berühren.

21. Meßvorrichtung nach einem der Ansprüche 3 bis 20, dadurch gekennzeichnet,

daß der zentrale Längsbalken (3) mit einem Bezugselement (15) versehen ist, das von seiner Oberseite vorspringt, um einen Nullpunkt für die Messung zu schaffen.

22. Meßvorrichtung nach einem der Ansprüche 3 bis 21, dadurch gekennzeichnet,

daß die Greiforgane (9) mit austauschbaren Kopfteilen (10) versehen sind, die spezifisch auf eine Befestigung an speziell ausgebildeten Bezugspunkten wie beispielsweise Bezugslöchern oder Bezugsbolzen eingerichtet sind.

23. Meßvorrichtung nach einem der Ansprüche 3 bis 22, dadurch gekennzeichnet,

daß die Greiforgane (9) schwenkbar mit Höheneinstelleinrichtungen (7, 30) verbunden sind, die an den Querbalken (1, 2) zu Gleitbewegung daran entlang befestigt sind.

## Revendications

1. Procédé pour mesurer des déformations du cadre ou de la carrosserie d'un véhicule par contrôle des positions des points de référence au véhicule en que
— des organes (9) de préhension sont attachés au véhicule,
— une structure de mesure ayante une pluralité des poutres (1, 2, 3, 4) couplées l'une avec l'autre d'une manière permettante une variation de l'orientation mutuelle est suspendue sous le véhicule aux dits organes de préhension,
— au moins un bâton (13) de mesure porté par une poutre de la dite structure de mesure est orienté sur au moins un point de référence au véhicule et
— les trois coordonnées en espace du dit point de référence sont mesurées en lisant des données indiquantes les orientations et/ou les positions mutuelles des dites poutres et de au moins un bâton de mesure,
caracterisé en ce
que deux poutres (1, 2) transversales et une poutre (3) centrale longitudinale sont couplées l'une avec l'autre pour former un cadre de mesure en forme d'un H,
que deux paires des organes (9) de préhension, une paire avec chaque poutre, sont montées sur les dites poutres transversales déplaçable arrêtablement selon la poutre transversale respective,

que les dits quatre organes (9) de préhension sont attachés à quatre points de référence dans la région centrale du véhicule, un organe de préhension à chacun des dits points de référence, au moins trois des dits points de référence étants non endommagés,

que le dit cadre de mesure en forme d'un H, en utilisant les trois organes de préhension attachés aux trois points de référence non endommagés, est ajusté d'une manière qu'il est situé dans un plan de mesure parallèle au plan de fond du véhicule, la quatrième organe de préhension, si attaché à un point de référence endommagé, étant fixé et ajusté d'une manière que le plan de mesure n'est pas déplacé,

que une poutre (4) de mesure, en utilisant des organes (11) de fixation déplaçables et permettants une orientation arbitraire de la dite poutre de mesure dans le dit plan de mesure, est couplée avec les dites poutres transversales et

que le dit au moins un bâton (13) de mesure est monté sur la dite poutre de mesure et est déplacé selon la et est étendu pour ajuster son bout libre sur des autres points de référence au véhicule pour contrôler les coordonnées des dits autres points de référence en et sur le dit plan de mesure pour mesurer le cadre ou la carrosserie du véhicule en les directions verticale et horizontale.

2. Procédé selon la revendication 1, caractérisé en ce
que au moins une barre (5) de mesure est pourvue, qui à un de ses bouts est connectée pivotantement avec une des poutres (1, 2) transversales ou avec la poutre (3) centrale longitudinale pour des mesures directes et/ou en croix pour contrôler les positions d'autres points de référence au véhicule.

3. Dispositif de mesure pour la mise en oeuvre du procédé selon la revendication 1, ayant une structure de mesure ayante une pluralité des poutres (1, 2, 3, 4) couplées l'une avec l'autre d'une manière permettante une orientation mutuelle variable et pourvue avec des organes (9) de préhension pour suspendre la dite structure de mesure sous le véhicule et pourvue avec au moins un baton (13) de mesure susceptible d'être dirigé sur des points de référence au véhicule pour contrôler les positions en espace de ces points de référence par rapport aux positions de la dite pluralité des poutres, caractérisé en ce
que la structure de mesure a
— deux poutres (1, 2) transversales chacune pourvue avec une paire des organes (9) de préhension ajustables selon la poutre (1, 2) transversale respective pour suspendre les dites poutres (1, 2) transversales sous quatre points de référence au véhicule,
— une poutre (3) centrale longitudinale couplée détachablement avec les dites poutres (1, 2) transversales pour former un cadre de mesure en forme d'un H dans un plan de mesure parallèle au plan de fond du véhicule et
— une poutre (4) de mesure attachée ajustable- ment sous les dites poutres (1, 2) transverales par des organes (11) de fixation déplaçables arrêtablement selon les dites poutres (1, 2) transversales pour ajuster la dite poutre (4) de mesure sous un angle arbitraire par rapport à l'axe longitudinal du véhicule dans un plan parallèle au plan de mesure et

que le au moins un bâton (13) de mesure est attaché à la poutre (4) de mesure pour des mesures horizontales et verticales des positions d'autres points de référence au véhicule.

4. Dispositif selon la revendication 3, caracterisé

par au moins une barre (5) de mesure chacune connectée pivotantement avec une des poutres (1, 2) transversales et/ou avec la poutre (3) centrale longitudinale pour des mesures directes ou, alternativement, en croix sur d'autres points de référence au véhicule.

5. Dispositif selon la revendication 4, caracterisé en ce

que chacune des poutres (1, 2) transversales et/ou la poutre (3) centrale longitudinale sont pourvues avec des articulations (17) universelles pour connecter pivotantement un bout d'une barre (5) de mesure.

6. Dispositif selon une des revendications 3 à 5, caracterisé en ce

que les diverses poutres (1, 2, 3, 4) sont construites divisibles quant à ses longueurs et sont pourvues avec des éléments (64) de connexion ayants des éléments de guidage (65; 66) et des éléments (61, 68; 67) d'arrêtage coopérants l'un avec l'autre pour correctement introduire les parties des poutres l'une dans l'autre pour d'être verrouillées l'une avec l'autre détachablement.

7. Dispositif selon la revendication 6, caracterisé en ce

que les parties des poutres (1, 2, 3, 4) divisées sont verrouillées l'une avec l'autre par des dispositifs (61, 63, 68, 69) à écrou.

8. Dispositif selon la revendication 6, caracterisé en ce

que les parties des poutres (1, 2, 3, 4) divisées sont connectées l'une avec l'autre par des fermetures à baionnette ou par des fermetures à déclic (65, 67).

9. Dispositif selon une des revendications 3 à 8, caracterisé en ce

que les diverses poutres (1, 2, 3, 4) sont des barres profilées produites d'un métal léger par exemple d'aluminium et préférablement pourvues avec des rainures (37) longitudinales.

10. Dispositif selon une des revendications 3 à 9, caracterisé en ce

que les connexions entre les organes (9) de préhension et les poutres (1, 2) transversales comprennent des fermetures à baionnette et/ou des fermetures à déclic pour connexion rapide.

11. Dispositif selon une des revendications 3 à 10, caractérisé en ce

que les bâtons (13) de mesure et/ou les barres (5) de mesure sont construits d'être des barres extensibles télescopiquement pourvues avec des échelles (57) de mesure selon au moins une partie de ses longueurs et/ou avec des pointes (14, 18) de mesure à ses bouts libres.

12. Dispositif selon une des revendications 3 à 11, caractérisé en ce

que les poutres (1, 2, 3, 4) sont pourvues avec des échelles (20) de mesure s'étendantes selon au moins une partie de ses longueurs.

13. Dispositif selon une des revendications 3 à 12, caractérisé en ce

que les diverses poutres (1, 2, 3, 4) sont connectées l'une avec l'autre, avec les organes (9) de préhension, avec les bâtons (13) de mesure et avec les barres (5) de mesure par des éléments (6, 11, 12, 17) de connexion construits pour d'être mûs selon les poutres (1, 2, 3, 4) respectives d'une manière glissante arrêtablement.

14. Dispositif selon la revendication 13, caractérisé en ce

que les poutres (1, 2, 3, 4) sont pourvues avec des rainures (37) s'étendantes selon ses longueurs pour recevoir des parties (34, 35) des dits éléments (6, 11, 12, 17) de connexion pour mouvement glissant selon les dites rainures.

15. Dispositif selon la revendication 13, caractérisé en ce

que les éléments (6, 11, 12, 17) de connexion sont construits pour engager les poutres (1, 2, 3, 4) respectives selon ses surfaces supérieures et au moins parties de ses surfaces latérales.

16. Dispositif selon la revendication 14 ou 15, caractérisé en ce

que les éléments (6, 11, 12, 17) de connexion comprennent des dispositifs (22, 31, 54) à écrou pour verrouiller les éléments (6, 11, 12, 17) de connexion sur les poutres (1, 2, 3, 4) respectives.

17. Dispositif selon une des revendications 3 à 16, caractérisé

par au moins un curseur additionnel monté sur au moins une des poutres (1, 2, 3, 4) pour mouvement glissant selon la poutre respective pour permettre des mesures directes sur d'autres points de référence.

18. Dispositif selon la revendication 17, caractérisé en ce

que les curseurs additionnels sont construits pour d'être verrouillés sur les poutres (1, 2, 3, 4) respectives par des actions des écroux.

19. Dispositif selon la revendication 17 ou 18, caractérisé en ce

que les curseurs additionnels sont pourvues avec des extensions construites pour d'être dirigées sur ou contacter d'autres points de références.

20. Dispositif selon une des revendications 3 à 19, caractérisé en ce

que le bâton (13) de mesure et/ou la barre (5) de mesure sont pourvues avec des extensions construites pour des mouvements glissants selon et/ou rotatifs autour de ceux pour diriger sur ou contacter d'autres points de référence.

21. Dispositif selon une des revendications 3 à 20, caractérisé en ce

**0 113 906**

que la poutre (3) centrale longitudinale est pourvue avec un élément (15) de référence saillant de sa surface supérieure pour créer un point zéro pour la mesure.

22. Dispositif selon une des revendications 3 à 21, caracterisé en ce

que les organes (9) de préhension sont pourvus avec des portions (10) de tête échangeables et construites spécifiquement pour d'être attachée sur des points de référence de forme speciale par exemple sur des trous de référence ou des boulons de référence.

23. Dispositif selon une des revendications 3 à 22, caracterisé en ce

que les organes (9) de préhension sont connectés pivotantement avec des éléments (7, 30) d'ajustage en hauteur attachés aux poutres (1, 2) transversales pour mouvement glissant selon celles.

11

FIG. 1

0 113 906

FIG. 2

FIG. 3

FIG. 4

FIG. 5

FIG. 6 A

FIG. 6B

67

65